# FASCICULE DE BREVET EUROPEEN

(11) **EP 2 183 149 B1**
(45) Date de publication et mention de la délivrance du brevet: **05.06.2013**
(21) Numéro de dépôt: 08829859.1
(22) Date de dépôt: 29.07.2008
(51) Int. Cl.: B62D 25/02

(54) **DOUBLURE D'AILE ARRIERE D'UN VEHICULE AUTOMOBILE ET VEHICULE AUTOMOBILE COMPORTANT AU MOINS UNE TELLE DOUBLURE.**
AUSKLEIDUNG FÜR DEN HECKSPOILER EINES MOTORFAHRZEUGS SOWIE MOTORFAHRZEUG MIT MINDESTENS EINER SOLCHEN AUSKLEIDUNG
REAR-WING LINER OF A MOTOR VEHICLE, AND MOTOR VEHICLE COMPRISING AT LEAST ONE SUCH LINER

(30) Priorité: 03.09.2007 FR 0757318
(43) Date de publication de la demande: 12.05.2010
(73) Titulaire: Peugeot Citroën Automobiles SA, 78140 Vélizy-Villacoublay (FR)
(72) Inventeur: ACQUAVIVA, Jérôme, F-91080 Courcouronnes (FR); BATAILLE, Luc, F-91640 Briis-sous-forges (FR)
(74) Mandataire: Callu Danseux, Violaine
(86) Numéro de dépôt international: PCT/FR2008/051421
(87) Numéro de publication internationale: WO 2009/030849

(56) Documents cités:
- WO-A1-03/035454
- DE-A1- 2 445 007
- GB-A- 498 671
- US-A- 5 795 015

## Description

La présente invention est relative à une doublure d'aile arrière d'un véhicule automobile, ainsi qu'à un véhicule automobile comportant au moins une telle doublure d'aile arrière.

La peau extérieure des véhicules automobiles est formée par une ossature d'éléments métalliques le plus souvent réalisée par emboutissage et comportant notamment, de chaque côté du véhicule, un côté d'habitacle monté sur une doublure d'aile arrière, le côté d'habitacle appartenant à la carrosserie du véhicule et étant donc la partie visible depuis l'extérieur du véhicule pour un observateur.

Traditionnellement chaque doublure d'aile arrière est composée d'une multitude de pièces indépendantes les unes des autres et assemblées entres elles.

Ces pièces comprennent :
- une doublure d'arc de pavillon,
- une doublure de pied central,
- un raidisseur vertical supérieur et inférieur,
- un pied de volet de coffre,
- un raidisseur horizontal s'étendant entre la doublure de pied central et le pied de volet de coffre, et
- un passage de roue s'étendant entre le raidisseur vertical et le pied de volet de coffre.

La réalisation de chacune de ces pièces demande une opération d'emboutissage et la mise en oeuvre de robots de manutention et d'assemblage, ainsi que la réalisation de maquettes d'assemblage et de contrôle.

Ces pièces formant la doublure d'aile arrière sont destinées à recevoir des pièces d'habillage fixées sur ladite doublure d'aile le plus souvent par des organes d'encliquetage s'emboîtant dans des orifices ménagés dans chacune des pièces de la doublure d'aile.

La réalisation d'orifices sur une multitude de pièces assemblées entres elles ultérieurement, peut entraîner des risques de dispersion entre les différents orifices et ainsi nuire à la qualité de l'accostage entre les différentes pièces de l'habillage.

L'invention a pour but de proposer une doublure d'aile arrière d'un véhicule automobile qui évite ces inconvénients et qui permet de réduire de manière sensible le coût de fabrication d'une telle doublure.

Un exemple de la technique antérieure est divulgué par le document GB 498671.

L'invention a donc pour objet une doublure d'aile arrière destinée à recevoir le côté d'un habitacle de véhicule automobile, caractérisée en ce qu'elle comprend une pièce de structure monobloc formant, entre autres, une doublure d'arc de pavillon et des éléments de bordure d'une ouverture.

Selon d'autres caractéristiques de l'invention :
- la pièce de structure monobloc est réalisée par emboutissage,
- la pièce de structure monobloc forme aussi une doublure de pied central, un raidisseur horizontal, un passage de roue, un pied arrière, un panneau de côté et un pied de volet de coffre,
- la pièce de structure monobloc forme aussi un panneau de côté et un passage de roue,
- les éléments de bordure de l'ouverture comprennent la doublure de pied central, une portion de l'arc de pavillon, le pied arrière et le panneau de côté,
- les éléments de bordure de l'ouverture comprennent le pied arrière, le raidisseur horizontal, le pied de volet de coffre et une portion de l'arc de pavillon,
- la doublure reçoit des éléments de garniture intérieure comprenant une garniture de pavillon, une garniture de pied central, une garniture de panneau de côté, une garniture de pied arrière et une garniture de support d'une tablette arrière de coffre, et
- la doublure comprend entre la partie inférieure de la doublure de pied central et le panneau de côté, un raidisseur temporaire destiné à être coupé.

L'invention a également pour objet un véhicule automobile qui comprend au moins une doublure d'aile arrière telle que précédemment mentionnée.

L'invention sera mieux comprise à la lecture de la description qui va suivre, donnée uniquement à titre d'exemple et faite en référence aux dessins annexés, sur lesquels :
- la Fig. 1 est une vue de côté d'une doublure d'aile arrière, conforme à l'invention, et
- la Fig. 2 est une vue schématique en perspective de la doublure d'aile arrière sur laquelle est monté un côté d'un habitacle d'un véhicule automobile, différentes garnitures intérieures destinées à être fixées sur ladite doublure d'aile arrière étant également représentées.

Dans tout ce qui suit, les termes de position "avant", "arrière", "inférieure" et "supérieure" correspondent aux orientations du véhicule dans lesquels l'axe X est l'axe longitudinal du véhicule, l'axe Y est l'axe transversal et l'axe Z est l'axe vertical orienté.

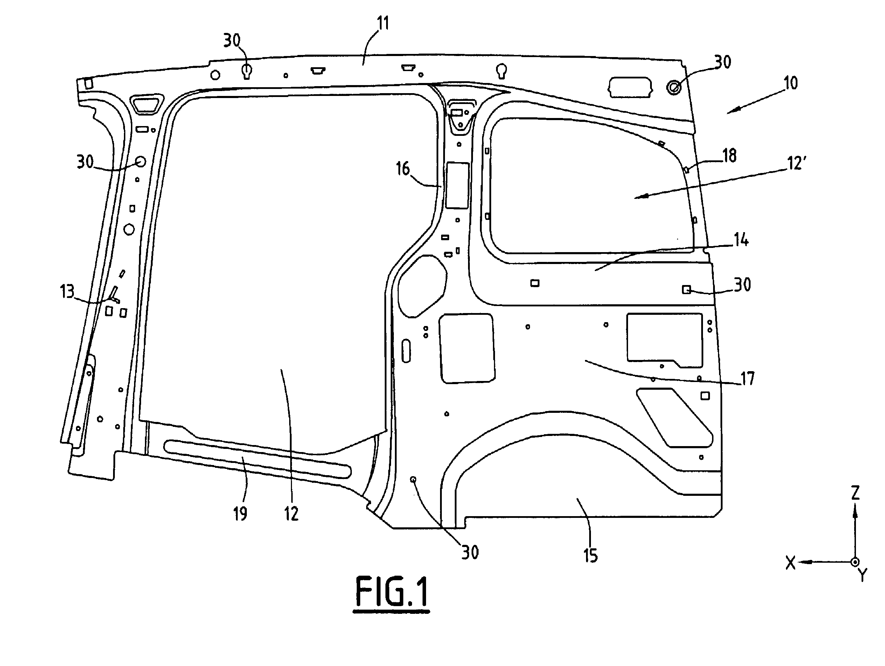

Sur la Fig. 1, on a représenté une doublure d'aile arrière 10 destinée à recevoir le côté d'un habitacle d'un véhicule automobile. Le côté d'habitacle appartient à la carrosserie du véhicule, il est visible depuis l'extérieur du véhicule, la doublure d'aile arrière 10 étant masquée par ce dernier.

Cette doublure d'aile arrière 10 est formée par une pièce de structure monobloc, métallique et réalisée de préférence par emboutissage.

Cette pièce 10 forme, entre autres, une doublure d'arc de pavillon 11 et des éléments de bordure d'une ouverture 12 ou 12'.

Plus particulièrement, la pièce de structure monobloc 10 forme aussi une doublure de pied central 13, un raidisseur horizontal 14, un passage de roue 15, un pied arrière 16, un panneau de côté 17 et un pied de volet de coffre 18.

Dans l'exemple de réalisation représenté sur cette figure, l'ouverture 12' correspond à une ouverture pour une fenêtre arrière ménagée entre l'arc de pavillon 11, le pied arrière 16, le raidisseur horizontal 14, et le pied de volet de coffre 18.

Cette doublure d'aile arrière 10 présente l'avantage de pouvoir être utilisée pour différentes versions d'un véhicule automobile, comme par exemple :
une version avec le côté de l'habitacle dépourvu de porte latérale et dans ce cas le côté d'habitacle est plein au niveau de l'ouverture 12, ou
une version avec le côté de l'habitacle dépourvu de fenêtre arrière et dans ce cas le côté d'habitacle est plein au niveau de l'ouverture 12'.

Afin de rigidifier la pièce 10 réalisée par emboutissage, un raidisseur 19 temporaire est disposé entre la partie inférieure de la doublure de pied central 13 et le panneau de côté 17.

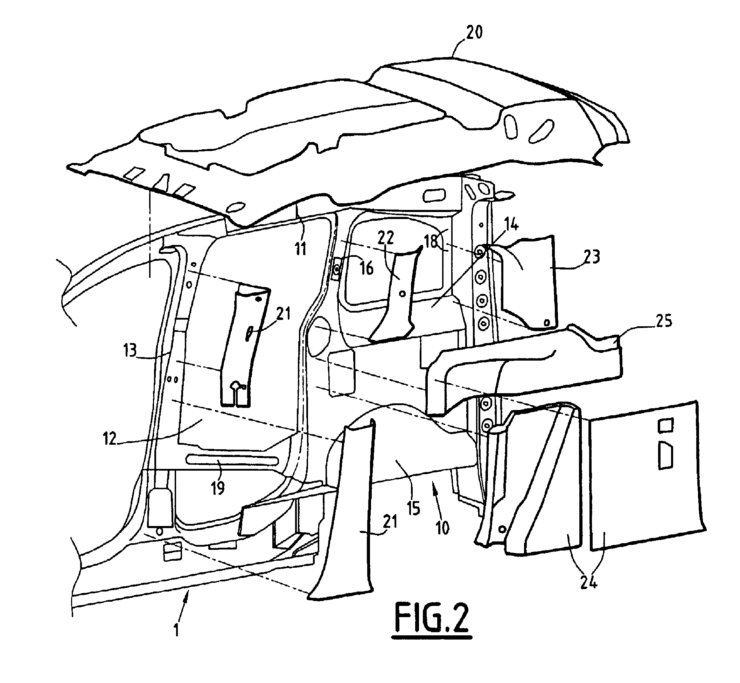

Les différents éléments composant la pièce 10 comportent des orifices 30 destinés à recevoir des éléments de garniture intérieure, ainsi que montré à la Fig. 2.

Sur cette figure, la doublure d'aile arrière 10 reçoit un côté 1 d'un habitacle du véhicule automobile et les éléments de la garniture intérieure sont fixés sur la doublure d'aile arrière 10 au moyen d'organes d'encliquetage, non représentés, s'emboîtant dans les orifices 30.

Les éléments de garniture comprennent une garniture 20 de pavillon, une garniture de pied central 21 formée en deux parties, une garniture 22 de pied arrière, une garniture 23 pour le pied volet de coffre, une garniture 24 de panneau de côté formée de deux éléments et une garniture 25 de support d'une tablette arrière de coffre, non représentée.

De préférence, les différents éléments de la garniture intérieure sont des pièces principalement en matière plastique.

Après le montage du côté 1 d'habitacle sur la doublure d'aile arrière 10, le raidisseur 19 est découpé. En variante, le raidisseur 19 peut également être découpé après le montage du côté 1 d'habitacle sur la doublure 10 et la fixation des différents éléments de la garniture intérieure.

Le fait de réaliser les orifices 30 de fixation des différents éléments de la garniture intérieure sur une seule pièce monobloc permet d'éviter les dispersions lors de la réalisation de ces orifices ce qui garantit un bien meilleur accostage entre les différents éléments de la garniture intérieure et un niveau de la "qualité perçue" bien supérieur aux véhicules réalisés jusqu'à présent.

Certaines variantes de véhicule ne comportent aucun élément de garniture intérieure, dans ce cas, le fait de réaliser la doublure d'aile arrière en une seule pièce permet d'obtenir un intérieur plus propre et d'éviter des zones de raccordement entre les différentes pièces.

De plus, l'emboutissage de la doublure d'aile arrière ne nécessite qu'une opération et évite l'utilisation de robots de manutention et d'assemblage, de moyens d'assemblage et de maquettes de contrôle de l'assemblage des différentes pièces.

La feuillure intérieure du pourtour de l'ouverture de la vitre arrière présente une épaisseur constante ce qui facilite le montage d'un joint d'étanchéité car il n'existe aucun changement d'épaisseur.

La doublure d'aile arrière selon l'invention permet de regrouper en une seule pièce monobloc six à huit pièces différentes.

Selon une variante, la pièce de structure monobloc 10 forme une doublure de pied central 13, un raidisseur horizontal 14, un pied arrière 16 et un pied de volet de coffre 18.

## Revendications

1. Doublure d'aile arrière destinée à recevoir le côté (1) d'un habitacle de véhicule automobile, comportant une pièce de structure (10) monobloc formant, entre autres, une doublure d'arc de pavillon (11) et des éléments (13, 14, 16, 18) de bordure d'une ouverture (12, 12') **caractérisé en ce que** qu'elle comprend des orifices (30) destinés à recevoir des éléments de garniture intérieure.

2. Doublure d'aile arrière selon la revendication 1, **caractérisée en ce que** la pièce de structure monobloc (10) est réalisée par emboutissage.

3. Doublure d'aile arrière selon la revendication 1 ou 2, **caractérisée en ce que** la pièce de structure monobloc (10) forme aussi une doublure de pied central (13), un raidisseur horizontal (14), un pied arrière (16) et un pied de volet de coffre (18).

4. Doublure d'aile arrière selon l'une quelconque des revendications 1 à 3, **caractérisée en ce que** la pièce de structure monobloc (10) forme aussi un panneau de côté (17) et un passage de roue (15).

5. Doublure d'aile arrière selon les revendications 3 et 4, **caractérisée en ce que** les éléments de bordure de l'ouverture (12) comprennent la doublure de pied central (13), une portion de l'arc de pavillon (11), le pied arrière (16) et le panneau de côté (17).

6. Doublure d'aile arrière selon la revendication 5, **caractérisée en ce que** les éléments de bordure de l'ouverture (12') comprennent le pied arrière (16), le raidisseur horizontal (14), le pied de volet de coffre (18) et une portion de l'arc de pavillon (11).

7. Doublure d'aile arrière selon l'une quelconque des revendications 1 à 6, **caractérisée en ce qu'**elle reçoit des éléments d'une garniture intérieure comprenant une garniture (20) de pavillon, une garniture (21) de pied central (13), une garniture (24) de panneau de côté (17), une garniture (22) de pied arrière (16) et une garniture (25) de support d'une tablette arrière de coffre.

8. Doublure d'aile arrière selon les revendications 3 et 4, **caractérisée en ce qu'**elle comprend, entre la partie inférieure de la doublure de pied central (13) et le panneau de côté (17), un raidisseur (19) temporaire destiné à être découpé.

9. Véhicule automobile, **caractérisée en ce qu'**il comprend au moins une doublure d'aile arrière (10) selon l'une quelconque des revendications 1 à 8.

## Patentansprüche

1. Innenblech eines hinteren Kotflügels, das dazu bestimmt ist, die Seite (1) einer Fahrgastzelle eines Kraftfahrzeugs aufzunehmen, umfassend ein Monoblock-Strukturteil (10), das unter anderem ein Dachbogeninnenblech (11) und Rahmenelemente (13, 14, 16, 18) einer Öffnung (12, 12') bildet, **dadurch gekennzeichnet, dass** es Bohrungen (30) umfasst, die dazu bestimmt sind, Innenverkleidungselemente aufzunehmen.

2. Hinteres Kotflügelinnenblech nach Anspruch 1, **dadurch gekennzeichnet, dass** das Monoblock-Strukturteil (10) durch Tiefziehen hergestellt wird.

3. Hinteres Kotflügelinnenblech nach Anspruch 1 oder 2, **dadurch gekennzeichnet, dass** das Monoblock-Strukturteil (10) auch eine B-Säule (13), eine waagrechte Versteifung (14), eine C-Säule (16) und eine Heckklappensäule (18) bildet.

4. Hinteres Kotflügelinnenblech nach irgendeinem der Ansprüche 1 bis 3, **dadurch gekennzeichnet, dass** das Monoblock-Strukturteil (10) auch ein Seitenpaneel (17) und einen Radkasten (15) bildet.

5. Hinteres Kotflügelinnenblech nach den Ansprüchen 3 und 4, **dadurch gekennzeichnet, dass** die Rahmenelemente der Öffnung (12) die B-Säule (13), einen Teil des Dachbogens (11), die C-Säule (16) und das Seitenpaneel (17) umfassen.

6. Hinteres Kotflügelinnenblech nach Anspruch 5, **dadurch gekennzeichnet, dass** die Rahmenelemente der Öffnung (12') die C-Säule (16), die waagrechte Versteifung (14), die Heckklappensäule (18) und einen Teil des Dachbogens (11) umfassen.

7. Hinteres Kotflügelinnenblech nach irgendeinem der Ansprüche 1 bis 6, **dadurch gekennzeichnet, dass** es Innenverkleidungselemente umfassend einen Dachhimmel (20), eine Verkleidung (21) der B-Säule (13), eine Verkleidung (24) des Seitenpaneels (17), eine Verkleidung (22) der C-Säule (16) und eine Verkleidung (25) der Halterung einer Ablageplatte des Kofferraums erhält.

8. Hinteres Kotflügelinnenblech nach den Ansprüchen 3 und 4, **dadurch gekennzeichnet, dass** es zwischen dem unteren Abschnitt des B-Säulen-Innenblechs (13) und dem Seitenpaneel (17) eine temporäre Versteifung (19) umfasst, die zuzuschneiden ist.

9. Kraftfahrzeug, **dadurch gekennzeichnet, dass** es zumindest ein hinteres Kotflügelinnenblech (10) nach irgendeinem der Ansprüche 1 bis 8 umfasst.

## Claims

1. Rear-wing liner intended to receive the side (1) of a motor vehicle passenger compartment, comprising a one-piece structural part (10) forming, among others, a roof arch liner (11) and elements (13, 14, 16, 18) for bordering an opening (12, 12') **characterised in that** it comprises orifices (30) intended to receive interior trim elements.

2. Rear-wing liner according to claim 1, **characterised in that** the one-piece structural part (10) is carried out via stamping.

3. Rear-wing liner according to claim 1 or 2, **characterised in that** the one-piece structural part (10) also forms a central foot lining (13), a horizontal stiffener (14), a rear foot (16) and a boot shutter foot (18).

4. Rear-wing liner according to any of claims 1 to 3, **characterised in that** the one-piece structural part (10) also forms a side panel (17) and a wheel arch (15).

5. Rear-wing liner according to claims 3 and 4, **characterised in that** the elements for bordering the opening (12) include the central foot lining (13), a portion of the roof arch (11), the rear foot (16) and the side panel (17).

6. Rear-wing liner according to claim 5, **characterised in that** the elements for bordering the opening (12') include the rear foot (16), the horizontal stiffener (14), the boot shutter foot (18) and a portion of the roof arch (11).

7. Rear-wing liner according to any of claims 1 to 6, **characterised in that** it receives elements of an interior trim comprising a roof trim (20), a trim (21) of the central foot (13), a trim (24) of the side panel (17), a trim (22) of the rear foot (16) and a trim (25) for supporting a boot rear shelf.

8. Rear-wing liner according to claims 3 and 4, **characterised in that** it comprises, between the lower portion of the central foot lining (13) and the side panel (17), a temporary stiffener (19) intended to be cut.

9. Motor vehicle, **characterised in that** it comprises at least one rear-wing liner (10) according to any of claims 1 to 8.
